# EUROPEAN PATENT SPECIFICATION

(11) **EP 3 816 204 B1**
(45) Date of publication and mention of the grant of the patent: **07.06.2023**
(21) Application number: 19306415.1
(22) Date of filing: 31.10.2019
(51) Int. Cl.: C08G 77/12, C01B 3/00, C01B 3/06, C07F 7/02

(54) **PROCESS FOR PRODUCING AND REGENERATING HYDROGEN CARRIER COMPOUNDS**
VERFAHREN ZUR HERSTELLUNG UND REGENERIERUNG VON WASSERSTOFFTRÄGERVERBINDUNGEN
PROCÉDÉ DE PRODUCTION ET DE RÉGÉNÉRATION DE COMPOSÉS PORTEURS D'HYDROGÈNE

(43) Date of publication of application: 05.05.2021
(73) Proprietor: Hysilabs, SAS, 13100 Aix-en-Provence (FR)
(72) Inventor: BURCHER, Benjamin, 74410 Saint-Jorioz (FR); LOME, Vincent, 13160 Chateaurenard (FR); BENOIT, Remy, 30400 Villeuves-les-Avignon (FR)
(74) Representative: De Kezel, Eric

(56) References cited:
- WO-A1-2007/018283
- US-A1- 2009 041 649

## Description

The present invention relates to a process for producing and for regenerating siloxane hydrogen carrier compounds. The present invention also relates to siloxane hydrogen carrier compounds and to a method for producing hydrogen from said siloxane hydrogen carrier compounds.

The ability to store, transport and release hydrogen in a safe, convenient, and environment-friendly manner source and to produce and store hydrogen efficiently, economically and safely, are main challenges to be overcome in order to democratize the use of hydrogen as an energy vector.

Currently hydrogen is mainly delivered either by pipeline, by tube trailers as a compressed gas or by special tankers in its liquefied form.

There are typically six routes for hydrogen delivery: it can be transported as a gas by pipeline, it can be produced on site, it can be transported as a compressed gas in tube trailers (for example as disclosed in WO2013/109918 (A1)), it can be transported as a condensed liquid in cryogenic trucks (for example as disclosed in WO2011/141287 (A1)), it can be stored in a solid-state hydrogen carrier material and released on-site (for example as disclosed in WO2009/080986 (A2)), and stored in a liquid-state hydrogen carrier material and released on-site.

Hydrogen can be produced on-site by two means. It can be produced on site by one process and directly consumed in another process which is defined as captive hydrogen. The other mean of on-site production is by water electrolysis, which produces hydrogen from water and electricity. It can be considered producing an environment-friendly hydrogen if powered by renewable energy.

In addition to incumbent delivery solutions which are cryogenic and compressed hydrogen, alternative solutions are emerging to provide hydrogen: hydrogen carriers. Hydrogen carriers are either solid-state or liquid-state materials that have the ability to store hydrogen and release it when needed. They bring advantages either for transport or storage, compared to incumbent solutions. Solid-state carriers include metallic hydrides enabling the uptake of hydrogen, by adsorption onto metal particles resulting in metal hydride. Among them, the magnesium hydride is stable at low pressure and standard temperature, making it convenient to transport and store. When needed, the material is heated to release the hydrogen gas. Solid-state solutions have been identified as best suited for same-site reversible processes of energy storage from renewable energies. Indeed, handling solid materials is not as convenient as handling gas or liquid ones.

Liquid hydrogen carriers can be any liquid-state material able to release hydrogen under specific conditions. The class of Liquid Organic Hydrogen Carriers (LOHC) is the most represented among the liquid hydrogen carriers. During the process called hydrogenation, which is a catalytic reaction, requiring energy in the form of heat, hydrogen is chemically bonded to the liquid organic carrier. Typically the carrier, being unsaturated and/or aromatic hydrocarbons such as toluene, is reacted with hydrogen to produce the corresponding saturated hydrocarbon, to be transported in a liquid-sate at standard temperature and pressure, for example as described in WO2014/082801 (A1) or WO2015/146170 (A1). Although the amount of hydrogen to be stored in LOHC depends on the yield of the hydrogenation process it is up to 7.2% mass of hydrogen contained per mass of liquid carrier. Then the hydrogen is released from the saturated hydrocarbons by a process called dehydrogenation, which is a catalytic reaction, requiring additional energy in the form of heat (above 300°C typically) due to the endothermic nature of the reaction. In order to produce on-demand hydrogen, heat may be produced from grid electricity (without control on its origin and on its impact on the environment) or heat may be retrieved by burning a part of the organic carrier.

Patent applications WO2010070001 (A1) and EP2206679 (A1) relate to a method for producing hydrogen comprising the steps consisting in : a) reacting a compound (C) comprising one or more groups Si-H with a fluoride ions source, thereby forming hydrogen and a by-product (C1); and b) recovering the obtained hydrogen. All the examples use silane compounds as hydrogen carriers; with the proviso of polymethylhydrosiloxane ("PHMS") in examples 1-2 and tetramethyldisiloxane in example 8.

Patent application WO2011098614 (A1) relates to a method for producing hydrogen comprising the steps of: i) contacting a compound (C) comprising one or more groups Si-H with a phosphorous based catalyst in the presence of a base in water as solvent, thereby forming hydrogen and a by-product (C1) without requiring any energy input (e.g. heat, electrical power, etc...); and ii) recovering the obtained hydrogen. All the examples use silane compounds as hydrogen carriers; tetramethyldisiloxane is the only siloxane containing compound recited in the lists of potential hydrogen carrier. WO2011098614 (A1) also discloses a step c) of recycling the obtained by-product (C1) with an acyl halide and contacting the obtained product with a metal hydride, thereby regenerating compound (C), wherein the acyl halide is CH₃C(=O)Cl and the metal hydride is LiAlH₄.

Patent application WO2010094785 (A1) relates to a method for producing hydrogen comprising the steps of: i) contacting a compound (C) comprising one or more groups Si-H with an amine based catalyst in a solvent selected from an alcohol or an aqueous solution, thereby forming hydrogen and a by-product (C1) without requiring any energy input (e.g. heat, electrical power etc...); and ii) recovering the obtained hydrogen. Most of the examples use silane compounds as hydrogen carriers; with the proviso of polymethylhydrosiloxane ("PHMS") in example 12 and tetramethyldisiloxane in example 16. WO2010094785 (A1) also discloses a step c) of recycling the obtained by-product (C1) with an acyl halide and contacting the obtained product with a metal hydride, thereby regenerating compound (C), wherein the acyl halide is CH₃C(=O)Cl and the metal hydride is LiAlH₄.

Whilst WO2010070001 (A1), EP2206679 (A1), WO2011098614 (A1) and WO2010094785 (A1) already represent a breakthrough in the field of hydrogen-based carrier system that releases hydrogen on-demand, said techniques would still benefit from improved efficiency, performance, and cost effectiveness; in addition, since the overall regeneration method of the hydrogen-based carrier according to both WO2011098614 (A1) and WO2010094785 (A1) requires the use of the expensive LiAlH4 reducing agent leading to aluminium oxide by-products, which retreatment process is energy-consuming (a lot of electricity is needed for the electrolysis step), is polluting, and releases carbon dioxide (CO₂), carbon monoxide (CO), fluorinated effluents and polycyclic aromatic hydrocarbons (PAH), there is still some progress to be made in order to develop a more environmentally friendly and carbon-free regeneration method applicable to hydrogen-based carrier.

WO 2007/018283 (A) describes a process for the preparation of cyclic dihydrogenpolysiloxanes having H₂SiO units having a molecular weight within the range of 1,500 to 1,000,000. The siloxanes having a molecular weight of 1,500 are therefore liquid. The cyclic polysiloxanes are prepared by hydrolysis in presence of hydrochloric acid of dichlorosilane H₂SiCl₂ followed by a polymerisation step.

US 2009/041649 (A) describes a process for the production of liquid siloxane hydrogen carrier having a cyclic structure wherein the number of siloxy units is in the range of 4 to 7 wherein the process involves the reaction of dihalosilane H₂SiX₂ with hexane in presence of zinc carbonate.

WO 2019/211301 (A) describes a process for the production and a process for the regeneration of liquid siloxane hydrogen carrier compounds. In particular, it describes liquid siloxane hydrogen carrier compounds having a linear structure and comprising -SiH₃ groups or compounds having a cyclic structure. The process involves the hydrolysis of dichlorosilane as starting compound followed by polycondensation. The process also involves the use of silica or silicate subjected to halogenation step or a reduction step.

Thus, there remains a need for further improvements in efficiency, performance, and cost effectiveness of such clean energy vectors, for a variety of applications, such as hydrogen delivery and hydrogen infrastructure building. There remains a need for improvements which exhibit greater amounts of hydrogen to be transported, enhanced efficiency, performance and that are cost effective. There remains a critical need for environment-friendly liquid-state hydrogen carriers that are able to release on-demand hydrogen without the need for additional energy. In addition, there remains a need for an integrated clean process wherein hydrogen carriers can not only be used as a valuable hydrogen source but also be produced without requiring carbon containing reactant and/or without carbon emissions, and also be regenerated from the by-products of the hydrogen separation environmentally friendly and without substantial carbon emissions, preferably without carbon emissions.

### Invention

It now has been discovered that liquid siloxane hydrogen carrier compounds can be produced from silica compound and/or silicate compound without requiring carbon containing reactant and/or without substantial carbon emissions, preferably without carbon emissions.

The silica compound according to the present invention can be defined as a silica containing compound, and/or a mixture of two or more of said silica containing compounds.

In an embodiment according to the present invention, the silica compound is selected from:
- a silica compound of generic formula SiO₂,ₓH₂O,
- [SiO₂]ₙ with n superior or equal to 2, or

- a mixture of two or more of said silica compounds.

The silicate compound according to the present invention can be defined as a silicate containing compound, and/or a mixture of two or more of said silicate containing compounds.

In an embodiment according to the present invention, the silicate compound is selected from:
- a sodium or potassium silicate compound of generic formula Na₂ₓSiO₂₊ₓ or K₂ₓSiO₂₊ₓ with x being an integer comprised between 0 and 2, or
- a silicic acid compound of generic formula [SiOₓ(OH)₄₋ₓ]^{x-} with x being an integer comprised between 0 and 4 or of generic formula [SiOₓ(OH)₄₋₂ₓ]ₙ with when n=1, x=0 or 1 and when n=2, x=1/2 or 3/2, or
- a silicate compound with a polymeric structure such as a disilicate ion of structure (Si₂O₇)⁶⁻ or a macroanion of generic structure [SiO₃²⁻]ₙ, [Si₄O₁₁⁶⁻]ₙ or [Si₂O₅²⁻]ₙ with n superior or equal to 2, or

- a mixture of two or more of said silicate compounds.

It has also been discovered that liquid siloxane hydrogen carrier compounds can be regenerated without requiring carbon containing reactant and/or without substantial carbon emissions, preferably without carbon emissions.

One of the most important advantages of the production/regeneration processes of the present invention consist in the possibility to apply it continuously; such continuous process can also, as explained hereafter, be operated without requiring raw materials input and/or without by-product emissions.

It has also been discovered that by using some liquid siloxane hydrogen carrier compounds,
- hydrogen could be produced in large amounts, with high yields, in a very short time and with very low production costs, without energy input to release it; and
- it was possible to generate said siloxane hydrogen carrier compounds without substantial carbon emissions, preferably without carbon emissions, by storing energy and recycling the by-products issued from the hydrogen production.

The term "hydrogen carrier compound" can be understood as a chemical compound able to store hydrogen, transport hydrogen and release hydrogen on demand; the characteristic of the hydrogen carrier compounds according to the present invention is that they can store/transport/release hydrogen without requiring any energy input (e.g. heat, electrical power etc...).

### Process for producing liquid siloxane hydrogen carrier compounds

The present invention relates to a process for producing liquid siloxane hydrogen carrier compounds from silica compound and/or silicate compound without requiring carbon containing reactant and/or without substantial carbon emissions, preferably without carbon emissions.

Although the silica and/or silicate compound (B) as defined hereunder is a preferred source for the starting material for the process for producing liquid siloxane hydrogen carrier compounds according to the present invention, silica and/or other silicate containing minerals such as e.g. zircon, jade, mica, quartz, cristobalite, sand etc... can advantageously be used as source of starting material for the process for producing liquid siloxane hydrogen carrier compounds. For the purposes of the present invention and appended claims, the silica and/or silicate compound (B) is preferably a silica compound and/or a silicate compound produced from the hydrolytic oxidation of the siloxane hydrogen carrier compound(s) according to the present invention.

### Process for regenerating siloxane hydrogen carrier compounds

The present invention also relates to a process for regenerating liquid siloxane hydrogen carrier compounds, said process comprising the step of hydrolytic oxidation of the siloxane hydrogen carrier compounds for the production of hydrogen and silica and/or silicate compound (B), and the step of conversion of said silica and/or silicate compound (B) into the liquid siloxane hydrogen carrier compounds, said process not requiring carbon containing reactant and/or without substantial carbon emissions, preferably without carbon emissions.

The production and regeneration of liquid siloxane hydrogen carrier compounds according to the present invention is further detailed and explained in the following description. Having managed to develop corresponding processes not requiring carbon containing reactant and/or without substantial carbon emissions, preferably without carbon emissions represents a breakthrough in the field of hydrogen energy, hydrogen transport and hydrogen for the automotive industry.

### Siloxane hydrogen carrier compounds

In an embodiment of the present invention, the liquid siloxane hydrogen carrier compounds which can advantageously be produced and/or regenerated by using the claimed process are selected amongst
(I) liquid linear siloxane hydrogen carrier compounds of formula (I): 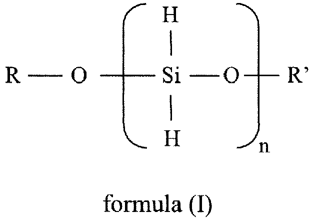 wherein n is an integer (representing the number of repeating units) superior or equal to one and wherein radicals R and R' don't contain carbon and wherein R and R' comprises Si and hydrogen and/or oxygen and/or halogen, or
(II) cyclic siloxane compounds having the formula (II) 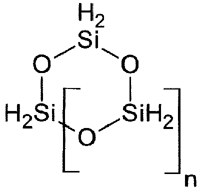 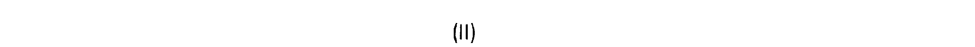 wherein n is an integer (representing the number of repeating units H2SiO) superior or equal to one.

In an embodiment, the present invention, in formula (I), n is preferably superior or equal to 2, for example superior or equal to 3, or even superior or equal to four; in an embodiment of the present invention, n is inferior or equal to 500, for example inferior or equal to 50. In an embodiment, the present invention, in formula (II), n is preferably superior or equal to 2, for example superior or equal to 3, or even superior or equal to four; in an embodiment of the present invention, n is inferior or equal to 500, for example inferior or equal to 32, for example inferior or equal to 17.

Such compounds present tremendous advantages compared to their poly(hydromethyl)siloxane analogs (ROMeₙHₙSiₙOₙR'). As an example poly(bis(hydro))siloxane can release more than twice (2.61 exactly for the same weight) the amount of hydrogen gas when compared to poly(hydromethyl)siloxane. Also, poly(bis(hydro))siloxane compounds exhibit a full carbon-free recyclability (when used in the hydrogen production and siloxanes production/regeneration processes according to the present invention) compared to analogs containing carbon fragments in their backbone.

In an embodiment of the present invention, the above carbon-free R and R' radicals of formula (I) are selected from -SiH₃, -SiH₂X, -SiHX₂, and -SiX₃, -SiH₂OH, -SiH(OH)₂,-Si(OH)₃ with X being a halogen, preferably a halogen selected from F, Cl, Br and I, more preferably Cl; preferred radicals are -SiH₃, -SiH₂X or -SiH₂OH.

Illustrative examples of the liquid linear siloxane hydrogen carrier compounds according to the present invention are:
H₃SiOH₂ₙSiₙOₙSiH₃, H₃SiOH₂ₙSiₙOₙSiH₂X, H₃SiOH₂ₙSiₙOₙSiHX₂, H₃SiOH₂ₙSiₙOₙSiX₃, H₃SiOH₂ₙSiₙOₙSiH₂OH, H₃SiOH₂ₙSiₙOₙSiH(OH)₂, H₃SiOH₂ₙSiₙOₙSi(OH)₃, XH₂SiOH₂ₙSiₙOₙSiH₂X, XH₂SiOH₂ₙSiₙOₙSiHX₂, XH₂SiOH₂ₙSiₙOₙSiH₂OH, XH₂SiOH₂ₙSiₙOₙSiH(OH)₂, XH₂SiOH₂₂SiₙOₙSi(OH)₃, X₂HSiOH₂ₙSiₙOₙSiH₂X, X₂HSiOH₂ₙSiₙOₙSiHX₂, X₂HSiOH₂ₙSiₙOₙSiH₂OH, X₂HSiOH₂ₙSiₙOₙSiH(OH)₂, X₂HSiOH₂ₙSiₙOₙSi(OH)₃, X₃SiOH₂ₙSiₙOₙSiH₂X, X₃SiOH₂ₙSiₙOₙSiHX₂, X₃SiOH₂ₙSiₙOₙSiX₃, X₃SiOH₂ₙSiₙOₙSiH₂OH, X₃SiOH₂ₙSiₙOₙSiH(OH)₂, X₃SiOH₂ₙSiₙOₙSi(OH)₃, (OH)₃SiOH₂ₙSiₙOₙSi(OH)₃, (OH)₃SiOH₂ₙSiₙOₙSiH(OH)₂, (OH)₃SiOH₂ₙSiₙOₙSiH₂OH,
or a mixture of one or more of these compounds,
with X being a halogen, preferably a halogen selected from F, Cl, Br and I, more preferably Cl, and
with n being an integer superior or equal to 1, preferably superior or equal to 2, for example superior or equal to 3, or even superior or equal to four. In an embodiment of the present invention, n is inferior or equal to 500, for example inferior or equal to 50.

In an embodiment of the present invention, the above cyclic siloxane compounds of formula (II) are selected amongst one or more or more of the following compounds:

| | |
|---|---|
| 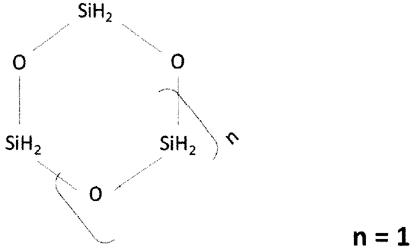 | Tri(bis(hydro)cyclosiloxane) ("D3") |
| 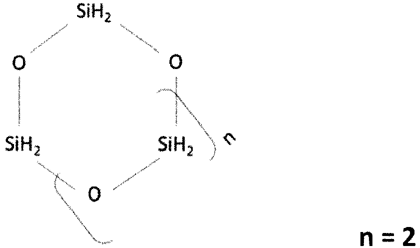 | Tetra(bis(hydro)cyclosiloxane) ("D4") |
| 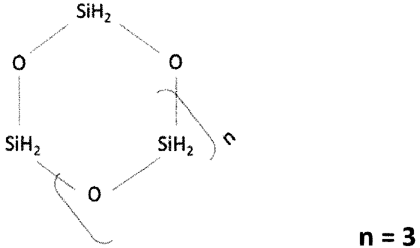 | Penta(bis(hydro)cyclosiloxane) ("D5") |
| 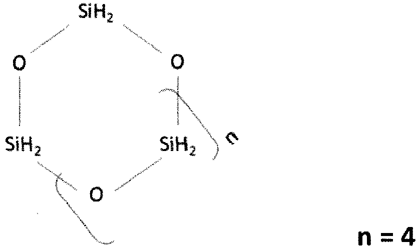 | Hexa(bis(hydro)cyclosiloxane) ("D6") |
| 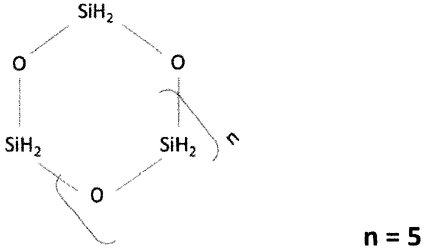 | Hepta(bis(hydro)cyclosiloxane) ("D7") |
| 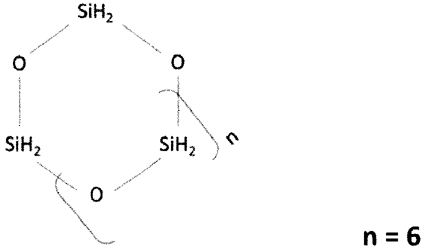 | Octa(bis(hydro)cyclosiloxane) ("D8") |
| 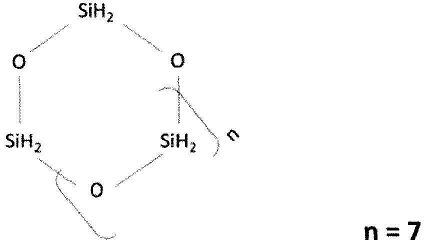 | Nona(bis(hydro)cyclosiloxane) ("D9") |
| 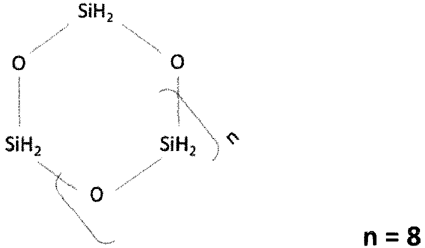 | Deca(bis(hydro)cyclosiloxane) ("D10") |
| 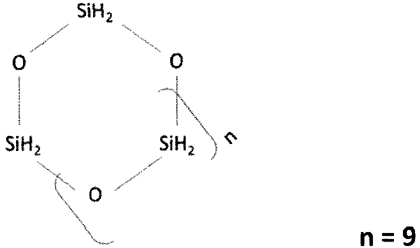 | Undeca(bis(hydro)cyclosiloxane) ("D11") |
| 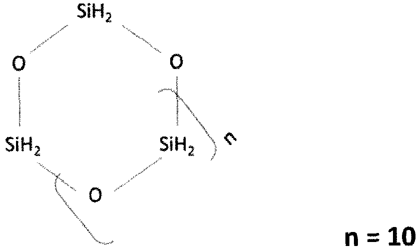 | Duodeca(bis(hydro)cyclosiloxane) ("D12") |
| 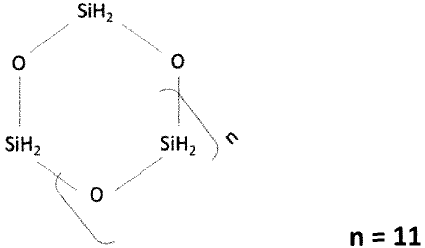 | Trideca(bis(hydro)cyclosiloxane) ("D13") |
| 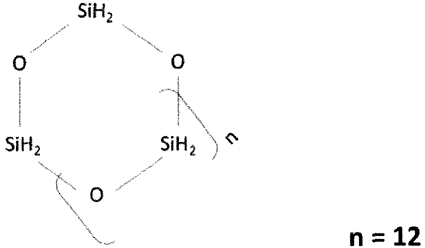 | Tetradeca(bis(hydro)cyclosiloxane) ("D14") |
| 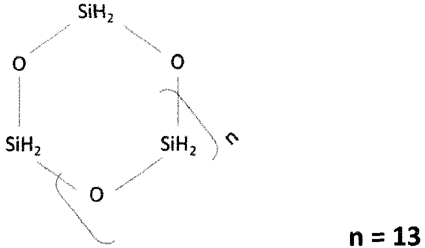 | Pendeca(bis(hydro)cyclosiloxane) ("D15") |
| 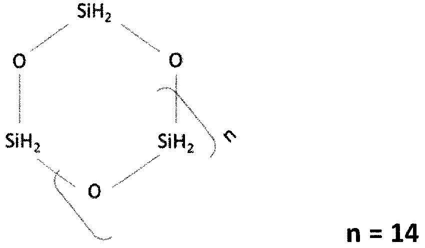 | Hexadeca(bis(hydro)cyclosiloxane) ("D16") |
| 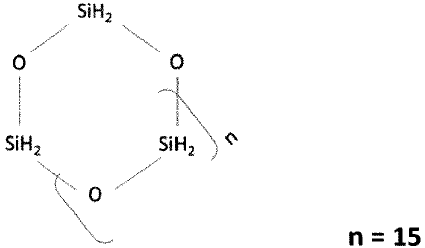 | Heptadeca(bis(hydro)cyclosiloxane) ("D17") |

For the above linear siloxane hydrogen carrier compounds according to formula (I), a carbon-free radical (e.g. SiH₃) chain end is selected since it presents many advantages (compared to other carbon containing chain ends such as SiMe₃ for instance):
- lower molecular weight and better hydrogen content allowing a better weight gravimetric efficiency of the siloxane compound, meaning a higher ratio between the weight of hydrogen carried by the compound compared to its overall molecular weight.
- Straightforward and without any carbon emissions recycling of the SiH₃ chain end, when compared to SiMe₃ for instance, due to the hydrolysable nature of the -SiH₃ fragment, which is not the case of Si-Me bonds, and also to the fact that H₃SiCl is a by-product of the regeneration process, which is hence valued, and does not require outside raw material input for its recycling.

In another embodiment of the present invention, the liquid siloxane hydrogen carrier compounds consist in a mixture of two or more of any of the above defined siloxane hydrogen carrier compounds.

In this "mixture" embodiment, when linear siloxane hydrogen carrier compounds of formula (I) represent the main species in substance amount (in mol) in the mixture (i.e. represent more than 50 mole percent), it is advantageous to restrict the amount of cyclic siloxane hydrogen carrier compounds of formula (II) to less than 20 mole percent, for example less than 10 mole percent in the mixture; in an embodiment, more than 0.01 mole percent, or even more than 0.1 mole percent of cyclic siloxane hydrogen carrier compounds of formula (I) can advantageously be present in said mixture.

In an embodiment according to the present invention, the molar ratio of the linear species regarding cyclic species in the "mixture" can be determined by ¹H NMR analysis for example.

In this "mixture" embodiment, when cyclic siloxane hydrogen carrier compounds of formula (II) represent the main species in substance amount (in mol) in the mixture (i.e. represent more than 50 mole percent), it is advantageous to restrict the amount of linear siloxane hydrogen carrier compounds of formula (I) to less than 45 mole percent, for example less than 20 mole percent in the mixture; in an embodiment, more than 1.0 mole percent, or even more than 5.0 mole percent of linear siloxane hydrogen carrier compounds of formula (I) can advantageously be present in said mixture.

In an embodiment according to the present invention, the liquid siloxane hydrogen carrier compounds (e.g. those of formula (I) and of formula (II)) present a dynamic viscosity between 0.1 and 10000 mPa.s at a temperature of 20°C and a pressure of 1.01325 × 10⁵ Pa. In an embodiment according to the present invention, the liquid siloxane hydrogen carrier compounds present a dynamic viscosity between 0.2 and 50 mPa.s at a temperature of 20°C and a pressure of 1.01325 × 10⁵ Pa. The dynamic viscosity at a temperature of 20°C and a pressure of 1.01325 × 10⁵ Pa of the siloxane hydrogen carrier compounds can be measured according to any appropriate method; for example, it can be determined according to the ISO 1628-1 norm.

In an embodiment according to the present invention, the molecular weight of the liquid cyclic siloxane hydrogen carrier compounds of formula (II) may range from 130 to 800 g/mol. The molecular weight of the siloxane hydrogen carrier compounds of formula (I) can be measured according to any appropriate method; for example, it can be determined by GC-MS, e.g. a GC-MS analysis performed on an Agilent GC/MSD 5975C apparatus. In an embodiment according to the present invention, the number average molecular weight (*M*ₙ) and/or the molecular weight distribution (*Ð)* of the liquid linear siloxane hydrogen carrier compounds of formula (I) may range from 64 to 30 000 g/mol and from 1.1 to 50, respectively. The average molecular weight and the molecular weight distribution of the linear siloxane hydrogen carrier compounds of formula (I) can be measured according to any appropriate method; for example, it can be determined according to the ISO 16014 norm.

In an embodiment according to the present invention, the liquid cyclic siloxane hydrogen carrier compounds of formula (II) present a characteristic strong and sharp absorption band between 800 and 1000 cm⁻¹ corresponding to the SiH₂ units, when analysed by FT-IR. In an embodiment according to the present invention, the cyclic siloxane hydrogen carrier compounds of formula (II) present a characteristic strong and sharp absorption band between 850 and 950 cm⁻¹.

In an embodiment according to the present invention, the above liquid siloxane hydrogen carrier compounds (e.g. those of formula (I) and of formula (II)) present a characteristic resonance between 4.5 and 4.9 ppm corresponding to the SiHzO units, when analysed by ¹H NMR in CDCl₃ at 25°C. ¹H NMR analyses can be performed on any appropriate spectrometer, e.g. a 400 MHz Bruker spectrometer.

In an embodiment according to the present invention, the above liquid siloxane hydrogen carrier compounds (e.g. those of formula (I) and of formula (II)) present a characteristic resonance between -45 and -50 ppm corresponding to the SiH₂O units, when analysed by ²⁹Si NMR in CDCl₃ at 25°C. ²⁹Si NMR analyses can be performed on any appropriate spectrometer, e.g. a 400 MHz Bruker spectrometer.

In an embodiment according to the present invention, the liquid siloxane hydrogen carrier compounds (e.g. those of formula (I) and of formula (II)) present a refractive index between 1 and 2 at a temperature of 20°C and at a wavelength of 589 nm. In an embodiment according to the present invention, the liquid siloxane hydrogen carrier compounds (e.g. those of formula (I) and of formula (II)) present a refractive index between 1.2 and 1.5 at a temperature of 20°C and at a wavelength of 589 nm. The refractive index of the siloxane hydrogen carrier compounds can be measured according to any appropriate method; for example, it can be determined according to the ASTM D1218 norm.

In an embodiment according to the present invention, the liquid siloxane hydrogen carrier compounds (e.g. those of formula (I) and of formula (II)) present a boiling point between 30 and 500°C, for example between 50 and 500°C, at a pressure of 1.01325 × 10⁵ Pa, for example a boiling point comprised between 50 and 200°C. The boiling point of the liquid siloxane hydrogen carrier compounds can be measured according to any appropriate method; for example, it can be determined according to the ISO 918 norm.

In an embodiment according to the present invention, the liquid siloxane hydrogen carrier compounds (e.g. those of formula (I) and of formula (II)) present a flash point between 50 and 500°C. The flash point of the siloxane hydrogen carrier compounds can be measured according to any appropriate method; for example, it can be determined according to the ISO 3679 norm.

In an embodiment according to the present invention, the liquid siloxane hydrogen carrier compounds consist in any mixture of two or more of the said liquid cyclic siloxane compounds of formula (II) ; said mixture preferably comprises at least 5 mole percent of [H₂SiO]₄, at least 20 mole percent of [H₂SiO]₅ , at least 5 mole percent of [H₂SiO]₆ and at least 40 mole percent of [H₂SiO]₇₊ species (i.e. formula (II) compounds with n respectively equal to 2, 3, 4 and equal or higher to 5) relative to the sum of the moles of siloxane hydrogen carrier compounds of formula (II) in the mixture.

In an embodiment according to the present invention, the liquid siloxane hydrogen carrier compounds consist in any mixture of two or more of the said liquid linear siloxane compounds of formula (I) ; said mixture preferably comprises at least 50 mol% of compounds of formula (I) wherein n is comprised between 10 and 30 (i.e. having between 10 and 30 repeating units of H2SiO) relative to the sum of the moles of siloxane hydrogen carrier compounds of formula (I) in the mixture, for example more than 80 mol%. According to the present invention, the siloxane hydrogen carrier compounds (e.g. those of formula (I) and of formula (II)) are liquid (at normal temperature and pressure (NTP); e.g. at a temperature of 20 °C and an absolute pressure of 1.01325 × 10⁵ Pa).

### Hydrogen production

The present invention also relates to a method for the production of hydrogen by hydrolytic oxidation of siloxanes in the presence of water wherein the siloxanes are selected amongst the above formula (I) and formula (II) compounds.

In an embodiment according to the present invention, the method for the production of hydrogen is characterised in that the water/[SiOH₂] unit molar ratio is superior or equal to 0.1. In an embodiment of the present invention, the said mixture of the siloxanes and water is characterised by a water/[SiOH₂] unit molar ratio which is comprised between 2 and 10, for example between 2 and 2.5.

In an embodiment of the present invention, the method for the production of hydrogen is characterised in the presence of at least one hydrogen release initiator during the hydrolytic oxidation of siloxanes in the presence of water. There is no restriction regarding the type of hydrogen release initiator which can be used according to the present invention as long as it favours the hydrolytic oxidation of the siloxane hydrogen carrier compounds of formula (I); and thus the water/siloxane reaction leading to the corresponding hydrogen release. For example, any compound which will favour the hydrolytic oxidation of the siloxane can advantageously be used as hydrogen release initiator; useful hydrogen release initiators can be selected amongst one or more compounds of the following list:
- a mineral base. For example, the mineral base can be an alkaline or alkaline-earth metal hydroxide such as potassium hydroxide or sodium hydroxide, the sodium hydroxide being particularly preferred;
- a protic acid. For example, the protic acid can be a mineral acid or an organic acid; e.g. hydrochloric acid, sulfuric acid, carboxylic acids (methanoic, ethanoic acid...) etc...;
- a compound able to release a nucleophile able to perform the hydrolytic oxidation of the siloxane hydrogen carrier compound such as, for example, a compound of formula RR'R"R‴ZY with Z being N or P, Y being OH, F, Cl or Br and R, R', R" and R‴ can be advantageously selected amongst C₁-C₁₅ alkyl or C₆-C₁₀ aryl, with R, R', R", R‴ being the same of different;
- a homogeneous organometallic catalyst able to promote the hydrolytic oxidation of the siloxane hydrogen carrier compound such as, for example, organometallic complexes based on iron, ruthenium, rhenium, rhodium, copper, chromium, iridium, zinc, and/or tungsten, etc...; and
- a heterogeneous catalyst able to promote the hydrolytic oxidation of the siloxane hydrogen carrier compound such as, for example, metal nanoparticles, [M/AlO(OH), M = Pd, Au, Rh, Ru, and Cu], Pd/C and/or any of the aforementioned metal preferably immobilized on an inorganic support.

In an embodiment of the present invention the hydrogen release initiator is selected amongst carbon-free hydrogen release initiator, e.g. sodium hydroxide.

In an embodiment of the present invention, the said mixture of siloxanes, water and hydrogen release initiator is characterised by a hydrogen release initiator / [SiOH₂] unit molar ratio which is superior or equal to 0.01. In an embodiment of the present invention, the said mixture of siloxanes, water and hydrogen release initiator is characterised by a hydrogen release initiator / [SiOH₂] unit molar ratio which is comprised between 0.05 and 3, for example between 0.05 and 0.35.

In an embodiment of the present invention, the method for the production of hydrogen is characterised in the presence of a mixture of the siloxane hydrogen carrier compounds of formula (I), water, a hydrogen release initiator as defined above and another catalyst. There is no restriction regarding the type of catalyst which can be additionally used according to the present invention as long as it increases the kinetic (i.e. the speed at which the hydrogen is released) of the hydrolytic oxidation of the siloxane hydrogen carrier compounds of formula (I) and/or formula (II); and thus the water/siloxane/hydrogen release initiator/catalyst reaction leading to the corresponding hydrogen release. For example, any compound which will significantly increase the kinetic of the hydrolytic oxidation of the siloxane can advantageously be used as catalyst. In an embodiment of the present invention, the said mixture of siloxanes, water, hydrogen release initiator and catalyst is characterised by a molar ratio of the catalyst relative to the [SiOH₂] monomer units which ranges from 0.01 to 0.5. Preferably the molar ratio of the catalyst C relative to the [SiOH₂] monomer units ranges from 0.02 to 0.1. More preferably the molar ratio of the catalyst C relative to the [SiOH₂] monomer units is lower than 0.05, e.g equal to 0.04.

The present invention also relates to the use of the selected siloxane hydrogen carrier compounds of formula (I) and/or formula (II) for the production of hydrogen.

There is no restriction regarding the methods which can be used for the hydrogen production method according to the present invention as long as the hydrogen release from the water/hydrogen carrier compounds of formula (I) and/or formula (II) may not require additional energy and satisfies the hydrogen industry requirements.

In an embodiment according to the present invention, the temperature of the method for the production of hydrogen from siloxane hydrogen carrier compounds of formula (I) and/or formula (II) may vary in a wide range, and may range notably from 0 to 200 °C. More preferably, the temperature ranges from 15 to 30 °C.

In an embodiment according to the present invention, the pressure of the method for the production of hydrogen from siloxane hydrogen carrier compounds of formula (I) and/or formula (II) may vary in a wide range, and may range notably from 1 × 10⁵ Pa to 500 × 10⁵ Pa.

In an embodiment according to the present invention, the method for the production of hydrogen from siloxane hydrogen carrier compounds of formula (I) and/or formula (II) can tolerate the presence of a solvent. There is no restriction regarding the type of solvent which can be used for the hydrogen production method according to the present invention as long as the hydrogen release from the hydrogen carrier compounds of formula (I) and/or formula (II) satisfies the hydrogen industry requirements.

In an embodiment according to the present invention, said solvent is selected from alcohol (e.g. methanol), aqueous solvents, organic solvents and/or a mixture of two or more of said solvents. For the purpose of the hydrogen production process according to the present invention, said solvent is considered as a reagent.

In an embodiment according to the present invention, said solvent is selected from diethylether, pentane, dichloromethane, toluene, tetrahydrofuran, methyltetrahydrofuran, cyclohexane, methylcyclohexane, or a mixture of two or more of the said cited solvents. In an embodiment according to the present invention, dichloromethane is preferred.

When cyclic siloxane hydrogen carrier compounds of formula (II) represent the main siloxanes species (as already defined hereinabove), it is advantageous to restrict the amount of solvent such that the mass ratio (in the reacting mixture) between the solvent and the cyclic siloxane hydrogen carrier compounds of formula (II) is lower than 1, preferably lower than 0.5.

In an embodiment according to the present invention, the method for the production of hydrogen from siloxane hydrogen carrier compounds of formula (I) and/or formula (II) comprises the following steps: a) contacting the siloxane hydrogen carrier compounds of formula (I) and/or formula (II) and a catalyst to form a siloxane/catalyst mixture and : b) combining the siloxane with an aqueous solution of the hydrogen release initiator, in the presence of the catalyst, to produce hydrogen. Steps a) and b) may occur consecutively or simultaneously.

In an embodiment according to the present invention, the reaction mixture used in the method for the production of hydrogen from siloxane hydrogen carrier compounds of formula (I) and/or formula (II) is characterised in that
- the siloxane hydrogen carrier compounds of formula (I) and/or formula (II),
- corresponding silicate-type by-products,
- hydrogen,
- the water,
- the hydrogen release initiator(s), and
- the optional catalyst, and
- the optional solvents
represent at least 90 percent by weight of the said reaction mixture, preferably at least 95 percent by weight, for example at least 99 percent by weight.

In an embodiment, the present invention also relates to a device for producing hydrogen according to the method hereabove described, said device comprising a reaction chamber comprising:
- a reaction mixture inlet, said mixture comprising the siloxane hydrogen carrier compounds of formula (I) and/or formula (II) and an optional solvent;
- an hydrogen outlet ;
- optionally a by-product collector ; and
- optionally a surface intended to be in contact with said mixture, coated with a polymer supported catalyst as described hereabove.

### Liquid siloxane production and liquid siloxane regeneration

As explained hereinabove, the main objectives of the present invention are both to produce the hydrogen carrier compounds and to regenerate the hydrogen carrier compounds by recycling the by-products issued from the hydrogen production, environmentally friendly and/or without substantial carbon emissions, preferably without carbon emissions.

Thus, the present invention relates to a process for producing liquid siloxane hydrogen carrier compounds from silica compound and/or silicate compound, preferably from silica and/or silicate compound (B), without requiring carbon containing reactant and/or without substantial carbon emissions, preferably without carbon emissions.

The present invention also relates to a process for regenerating siloxane hydrogen carrier compound(s), said process comprising the step of hydrolytic oxidation of siloxane hydrogen carrier compound(s) for the production of hydrogen and silica and/or silicate compound(s) (B), and the steps of conversion of said silica and/or silicate compound(s) (B) into siloxane hydrogen carrier compounds, preferably the same siloxane hydrogen carrier compound(s), said process not requiring carbon containing reactant and/or without substantial carbon emissions, preferably without carbon emissions.

In an embodiment according to the present invention, there is provided a process for the production of a liquid siloxane hydrogen carrier compound, preferably a formula (I) and/or formula (II) liquid siloxane hydrogen carrier compound,
said process comprising the following consecutive steps:
- providing silica compound and/or silicate compound,
   o either subjecting the silica compound and/or silicate compound to a hydrogenation step 2(a) to produce H₂Si(OH)₂ and subjecting H₂Si(OH)₂ to polycondensation step 4 to produce the said liquid siloxane hydrogen carrier compound, or
   o subjecting the silica compound and/or silicate compound to a hydrogenation and dehydration step 2(b) to produce H₂SiO, and
      ▪ either subjecting H₂SiO to a hydrolysis step 3(a) to produce H₂Si(OH)₂ and subjecting H₂Si(OH)₂ to polycondensation step 4 to produce the said liquid siloxane hydrogen carrier compound, or
      ▪ subjecting H₂SiO to polymerization step 3(b) to produce the said liquid siloxane hydrogen carrier compound.

### Silicate/silica.

In an embodiment to the present invention, i.e. when a silicate is selected as starting material of the siloxane production/regeneration process, an additional treatment (e.g. solvent evaporation, chemical treatment by an acid, pyrolysis...) of the silicate could advantageously be used to obtain silica (SiO₂), the latter being used as the raw material of the siloxane process.

In an embodiment to the present invention, the silica and/or the silicate compound could be subjected to an additional mechanical treatment, e.g. grinding and/or sieving, prior to be subjected to the steps 2(a) and 2(b).

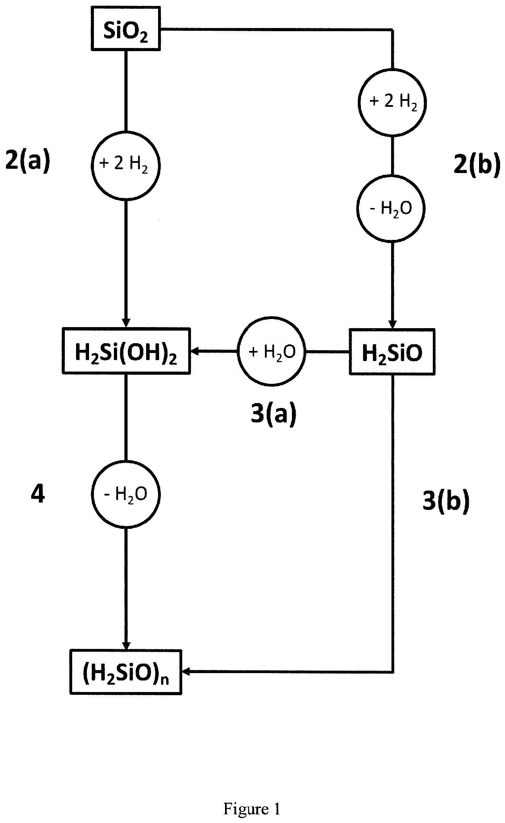

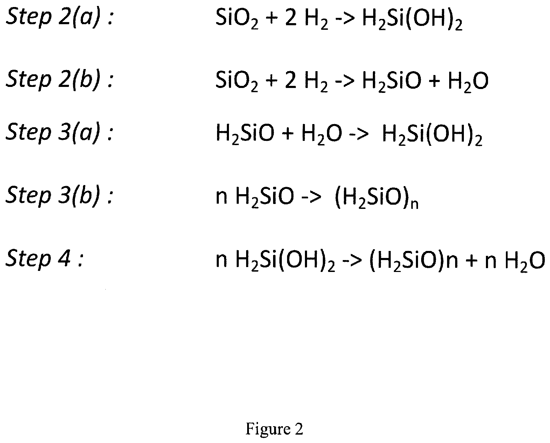

For illustrative and non-limiting purposes, an example of the siloxane production process is detailed in Figure 1, and Figure 2 illustrates examples of the individual process steps.

In an embodiment according to the present invention, there is also provided a process for the regeneration of a liquid siloxane hydrogen carrier compound, preferably a formula (I) and/or formula (II) liquid siloxane hydrogen carrier compound, said process comprising the hydrolytic oxidation of the said siloxane hydrogen carrier compound(s) for the production of hydrogen and silica and/or silicate compound (B) followed by the following consecutive steps:
o either subjecting the silica compound and/or silicate compound (B) to a hydrogenation step 2(a) to produce H₂Si(OH)₂ and subjecting H₂Si(OH)₂ to polycondensation step 4 to regenerate the said liquid siloxane hydrogen carrier compound, or
o subjecting the silica compound and/or silicate compound (B) to a hydrogenation and dehydration step 2(b) to produce H₂SiO, and
   ▪ either subjecting H₂SiO to a hydrolysis step 3(a) to produce H₂Si(OH)₂ and subjecting H₂Si(OH)₂ to polycondensation step 4 to regenerate the said liquid siloxane hydrogen carrier compound, or
   ▪ subjecting H₂SiO to polymerization step 3(b) to regenerate the said liquid siloxane hydrogen carrier compound.

In an embodiment according to the present invention, the above process for the regeneration of the liquid siloxane hydrogen carrier compound(s) is characterised in that the regenerated liquid siloxane hydrogen carrier compound(s) are preferably substantially the same as the starting liquid siloxane hydrogen carrier compound(s), preferably exactly the same.

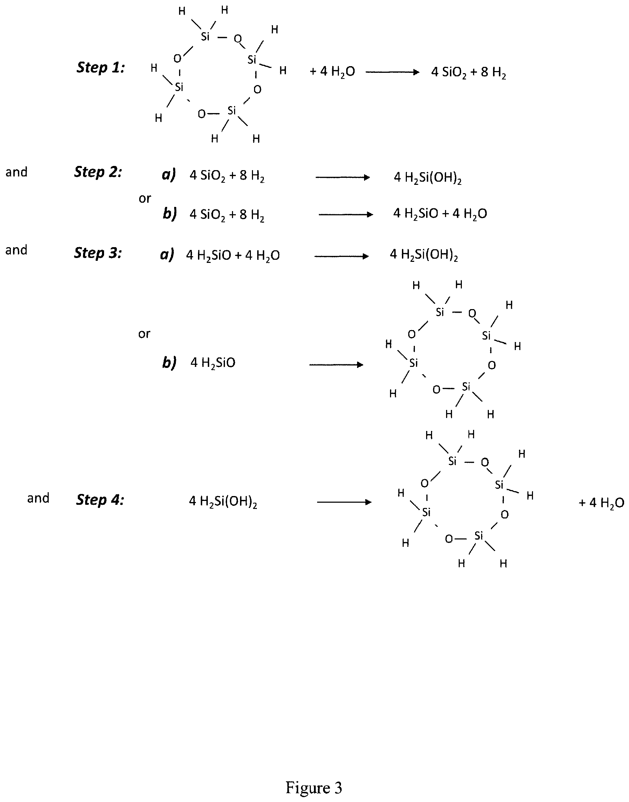

For illustrative and non-limiting purposes, an example of the regeneration process starting from the siloxane hydrogen carrier compound [H₂SiO]₄ is detailed in Figure 3;

Said regenerated siloxane hydrogen carrier compounds can advantageously be used in the hydrogen production method according to the present invention which allows to re-start the cycle.

A tremendous advantage brought by the polydihydrosiloxane compounds according to the present invention as hydrogen-based energy carriers (contrarily to PHMS and TMDS due to the presence of the non-hydrolysable methyl moiety bonded to the central silicon atom) is that their complete hydrolysis during the hydrogen liberation process leads uniquely a silica/silicate compound(s) (B); said silica/silicate compound(s) (B) being a straightaway starting material for an environmentally friendly and/or without substantial carbon emissions (preferably completely carbon-free) process, exhaustively exemplified and atom-economic regeneration process allowing to recover the exact starting fuel oil.

### Step 2(a) - Hydrogenation of silica/silicate type products to form H₂Si(OH)₂

Any appropriate method can be used for the hydrogenation of silica/silicate type products to form H₂Si(OH)₂

In an embodiment according to the present invention, said hydrogenation is performed in one stage.

For example, in an embodiment according to the present invention, the silica/silicate compound is hydrogenated in the presence of hydrogen gas for the production of H₂Si(OH)₂ as exemplified by the following equation

SiO₂ + 2 H₂ -> H₂Si(OH)₂

Other gas(es) can optionally be employed in addition to hydrogen, e.g. an inert gas such as argon or nitrogen. The reaction can be performed either with both reactants in the gas phase, in a plasma jet for example, or in a heterogeneous manner by reacting the solid silica/silicate compound with hydrogen gas, in a fluidised bed reactor for example. Reaction is the gas phase being preferred. In addition to the main reaction, side reactions can occur, for example the partial hydrogenation reaction leading to the HSiOH compound, as exemplified by the following equation: SiO₂ + 2 H₂ → HSiOH + H₂O.

The H₂/SiO₂ molar ratio is preferably comprised between 0.1 and 1000, for example between 1 and 50.

The HSiOH species might be in equilibrium with the H₂Si(OH)₂ species if maintained in an atmosphere containing H₂O. A heat source will be required, any source of heat can be selected, e.g. hot oil, steam, electric arc technology, induction heating, microwave, hot filament, plasma technology. A cooling source might be required to trap desired species, any cooling source can be selected e.g. water cooler, oil cooler, brine cooler, special heat exchanger ...; the heat recovered might advantageously be recovered to heat up reactors from other steps, plant facilities, produce electricity etc...

### Step 2(b) - Hydrogenation and dehydration of silica/silicate type products to form H₂SiO

Any appropriate method can be used for the hydrogenation and dehydration step 2(b) to produce H₂SiO.

For example, in an embodiment according to the present invention, the step 2(b) consists in the hydrogenation and dehydration of the silica/silicate compound in the presence of hydrogen gas for the production of H₂SiO as exemplified by the following equation

SiO₂ + 2 H₂ -> H₂SiO + H₂O

The H₂/SiO₂ molar ratio is preferably comprised between 0.1 and 1000, for example between 1 and 50.

Other gas(es) can optionally be employed in addition to hydrogen, e.g. an inert gas such as argon or nitrogen. Since this reaction is endothermic, a heat source is required; any source of heat can be selected, e.g. hot oil, steam, electric arc technology, induction heating, microwave, hot filament, plasma technology. Plasma is particularly preferred; for example, a corresponding plasma technology can advantageously comprise a plasma torch allowing to create a plasma jet. The plasma jet is preferably made from hydrogen gas, with or without additional gas(es) (such as, for example, argon), going through electrodes. Silica/silicate compound can be introduced into the hydrogen plasma jet under vacuum prior to react in the gas phase with hydrogen at a temperature comprised between 2000 and 20 000 °K to form H₂SiO and water. The hydrogenation/dehydration reaction of silica/silicate compounds by hydrogen gas produces water as by-product. The formed water might require to be removed continuously from the reaction area to prevent undesired and uncontrolled hydrolysis of H₂SiO. The formed water can advantageously be used as chemical reactant of step 2(c), and/or as heating source for other utilities and/or can be transformed in an electrolyser to reform hydrogen gas and/or can be used to run a steam turbine to produce electricity. H₂SiO can either be stored as a gas or a liquid prior to enter step 2(c) of the process or used straightaway. H₂SiO species might require to be isolated at a low temperature, for example a sub-zero Celsius degree temperature. H₂SiO species can be in equilibrium with other species, e.g. HSi(OH) cis and trans isomers.

### Step 3(a) - Hydrolysis of H₂SiO to form H₂Si(OH)₂

Any appropriate method can be used for the hydrolysis step 3(a) to produce H₂Si(OH)₂ For example, in an embodiment according to the present invention, the step 3(a) consists in the hydrolysis of H₂SiO in the presence of water (water preferably coming from hereabove stage 2(b)) for the production of H₂Si(OH)₂ as exemplified by the following equation

H₂SiO + H₂O -> H₂Si(OH)₂

The H₂O/H₂SiO molar ratio is preferably comprised between 0.1 and 1000, for example between 0.5 and 50.

Since the hydrolysis reaction of H₂SiO is exothermic, a cooling source might be required; any source can be selected e.g. water cooler, oil cooler, brine cooler, special heat exchanger ...; the heat recovered might advantageously be recovered to heat up reactors from other steps, plant facilities, produce electricity etc...The reaction can be performed in the gas phase or in solution. Additional light from a lamp (e.g. mercury lamp) may advantageously be used to trigger the hydrolysis reaction. The reaction is preferably performed at low temperature, for example sub-zero Celsius degree temperature or even below -30 °C.

### Step 3(b) - Production/Regeneration of the siloxane hydrogen carrier compounds from H₂SiO

Any appropriate method can be used for the Production/Regeneration of the siloxane hydrogen carrier compounds from H₂SiO. In an embodiment according to the present invention, there is provided a process for the polymerisation of H₂SiO to produce/regenerate the siloxane hydrogen carrier compounds. As the reaction might be exothermic, a cooling source might be required; any source can be selected e.g. water cooler, oil cooler, brine cooler, special heat exchanger ...; the heat recovered might advantageously be recovered to heat up reactors from other steps, plant facilities, produce electricity etc... Additional light from a lamp (e.g. mercury lamp) may advantageously be used to trigger the polymerisation reaction. The reaction is preferably performed at low temperature, for example sub-zero Celsius degree temperature or even below -30 °C.

### Step 4 - Production/Regeneration of the siloxane hydrogen carrier compounds from H₂Si(OH)₂

In an embodiment according to the present invention, there is provided a process for the polycondensation of H₂Si(OH)₂ to produce/regenerate the siloxane hydrogen carrier compounds. The polycondensation reaction will produce water as by-product. The formed water may advantageously be removed continuously from the reaction area to prevent undesired and uncontrolled hydrolysis of H₂Si(OH)₂ or of the siloxane. The formed water can advantageously be used as chemical reactant of step 2(c), and/or can be transformed in an electrolyser to reform hydrogen gas for example.

The reaction is preferably performed at low temperature, for example sub-zero Celsius degree temperature or even below -80 °C.

Additional light from a lamp (e.g. mercury lamp) may advantageously be used to trigger the polycondensation.

Final treating steps can advantageously be performed such as washings with water, containing or not a mineral base, gas stripping, drying steps etc...

In an embodiment according to the present invention, the energy consumption required by the overall siloxane hydrogen carrier of formula (I) and/or formula (II) production process may be comprised between 1 and 200 kWh/kg of produced siloxane, for example between 1 and 35 kWh/kg of produced siloxane.

In an embodiment according to the present invention, the energy consumption required by the overall siloxane hydrogen carrier of formula (I) and/or formula (II) regeneration process may be comprised between 1 and 2000 kWh/kg of liberated H₂, for example between 1 and 400 kWh/kg of liberated H₂.

The following terms and expressions contained herein are defined as follows:
- hydrogen carriers are either solid-state or liquid-state materials that contain hydrogen atoms, readily releasable as molecular dihydrogen (H2) when needed.

It should be obvious to those skilled in the art that the present invention enables embodiments under numerous other specific forms without leaving the field of application of the invention as claimed. Consequently, the present embodiments must be considered as illustrations, but may be modified in the defined field by the scope of the attached claims, and the invention must not be limited to the details given above.

## Claims

1. Process for the production of a liquid siloxane hydrogen carrier compound,
said process comprising the following consecutive steps:
- providing silica compound and/or silicate compound,
o either subjecting the silica compound and/or silicate compound to a hydrogenation step 2(a) to produce H₂Si(OH)₂ and subjecting H₂Si(OH)₂ to polycondensation step 4 to produce the said liquid siloxane hydrogen carrier compound, or
o subjecting the silica compound and/or silicate compound to a hydrogenation and dehydration step 2(b) to produce H₂SiO, and
▪ either subjecting H₂SiO to a hydrolysis step 3(a) to produce H₂Si(OH)₂ and subjecting H₂Si(OH)₂ to polycondensation step 4 to produce the said liquid siloxane hydrogen carrier compound, or
▪ subjecting H₂SiO to polymerization step 3(b) to produce the said liquid siloxane hydrogen carrier compound.

2. Process for the regeneration of a liquid siloxane hydrogen carrier compound wherein a liquid siloxane hydrogen carrier compound is subjected to hydrolytic oxidation for the production of hydrogen and silica and/or silicate compound (B) followed by the process according to claim 1 to produce a liquid siloxane hydrogen carrier compound.

3. Process for the regeneration of a liquid siloxane hydrogen carrier compound according to claim 2 wherein the regenerated siloxane hydrogen carrier compound is chemically identical to the siloxane hydrogen carrier compound subjected to hydrolytic oxidation.

4. Process for the production or regeneration of a liquid siloxane hydrogen carrier compound according to any of the preceding claims wherein the siloxane hydrogen carrier compound is selected amongst
(I) liquid linear siloxane hydrogen carrier compounds of formula (I): 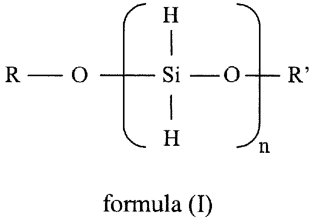 wherein n is an integer (representing the number of repeating units) superior or equal to one and wherein radicals R and R' don't contain carbon and wherein R and R' comprises Si and hydrogen and/or oxygen and/or halogen, and
(II) cyclic siloxane compounds having the formula (II) 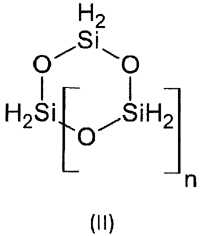 wherein n is an integer (representing the number of repeating units H2SiO) superior or equal to one.

5. Process according to claim 4 wherein, in formula (I), n is superior or equal to 2, for example superior or equal to 3, or even superior or equal to four.

6. Process according to any of claims 4 and 5 wherein, in formula (I), n is inferior or equal to 500, for example inferior or equal to 50.

7. Process according to any of claims 4 to 6 wherein the above carbon-free R and R' radicals of formula (I) are selected from -SiH₃, -SiH₂X, -SiHX₂, and -SiX₃, -SiH₂OH,-SiH(OH)₂, -Si(OH)₃ with X being a halogen, preferably Cl.

8. Process according to claim 4 wherein, in formula (II), n is superior or equal to 2, for example superior or equal to 3, or even superior or equal to four.

9. Process according to any of claims 4 and 5 wherein, in formula (II), n is inferior or equal to 500, for example inferior or equal to 32, for example inferior or equal to 17.

10. Process for the production or regeneration of liquid siloxane hydrogen carrier compounds according to any of the preceding claims, said compounds consisting in a mixture of the cyclic siloxane hydrogen carrier compounds of formula (II) and of the linear siloxane hydrogen carrier compounds of formula (I), wherein the cyclic siloxane hydrogen carrier compounds of formula (II) represent more than 50 mole percent of the mixture.

11. Process for the production or regeneration of liquid siloxane hydrogen carrier compounds according to claim 10 wherein the linear siloxane hydrogen carrier compounds of formula (I) represent more than 2.0 mole percent and less than 20 mole percent of the mixture.

## Patentansprüche

1. Verfahren zur Herstellung einer flüssigen Siloxan-Wasserstoffträgerverbindung, wobei das Verfahren die folgenden aufeinanderfolgenden Schritte umfasst:
- Bereitstellen von Silicaverbindung und/oder Silicatverbindung,
o entweder Aussetzen der Silicaverbindung und/oder Silicatverbindung einem Hydrierungsschritt 2(a), um H₂Si(OH)₂ herzustellen, und Aussetzen von H₂Si(OH)₂ einem Polykondensationsschritt 4, um die flüssige Siloxan-Wasserstoffträgerverbindung herzustellen, oder
o Aussetzen der Silicaverbindung und/oder Silicatverbindung einem Hydrierungs- und Dehydrierungsschritt 2(b), um H₂SiO herzustellen, und
▪ entweder Aussetzen von H₂SiO einem Hydrolyseschritt 3(a), um H₂Si(OH)₂ herzustellen, und Aussetzen von H₂Si(OH)₂ einem Polykondensationsschritt 4, um die flüssige Siloxan-Wasserstoffträgerverbindung herzustellen, oder
▪ Aussetzen von H₂SiO einem Polymerisationsschritt 3(b), um die flüssige Siloxan-Wasserstoffträgerverbindung herzustellen.

2. Verfahren zur Regenerierung einer flüssigen Siloxan-Wasserstoffträgerverbindung, wobei eine flüssige Siloxan-Wasserstoffträgerverbindung hydrolytischer Oxidation zur Herstellung von Wasserstoff und Silica- und/oder Silicatverbindung (B) ausgesetzt wird, gefolgt von dem Verfahren nach Anspruch 1 zum Herstellen einer flüssigen Siloxan-Wasserstoffträgerverbindung.

3. Verfahren zur Regenerierung einer flüssigen Siloxan-Wasserstoffträgerverbindung nach Anspruch 2, wobei die regenerierte Siloxan-Wasserstoffträgerverbindung chemisch identisch mit der Siloxan-Wasserstoffträgerverbindung ist, die hydrolytischer Oxidation ausgesetzt wird.

4. Verfahren zur Herstellung oder Regenerierung einer flüssigen Siloxan-Wasserstoffträgerverbindung nach einem der vorhergehenden Ansprüche, wobei die Siloxan-Wasserstoffträgerverbindung ausgewählt ist aus
(I) flüssigen linearen Siloxan-Wasserstoffträgerverbindungen der Formel (I): 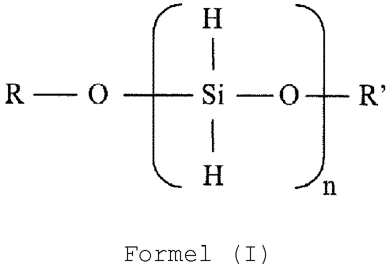 wobei n eine ganze Zahl (welche die Anzahl an Wiederholungseinheiten darstellt) größer oder gleich eins ist und wobei Reste R und R' keinen Kohlenstoff enthalten und wobei R und R' Si und Wasserstoff und/oder Sauerstoff und/oder Halogen umfassen, und
(II) cyclischen Siloxanverbindungen mit der Formel (II) 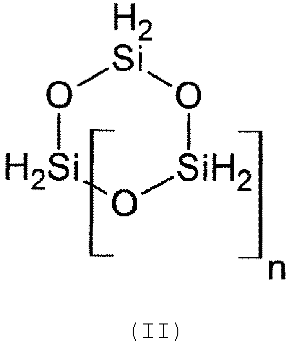 wobei n eine ganze Zahl (welche die Anzahl an Wiederholungseinheiten H2SiO darstellt) größer oder gleich eins ist.

5. Verfahren nach Anspruch 4, wobei in Formel (I) n größer oder gleich 2, zum Beispiel größer oder gleich 3 oder sogar größer oder gleich vier ist.

6. Verfahren nach einem der Ansprüche 4 und 5, wobei in Formel (I) n kleiner oder gleich 500, zum Beispiel kleiner oder gleich 50 ist.

7. Verfahren nach einem der Ansprüche 4 bis 6, wobei die obigen kohlenstofffreien Reste R und R' der Formel (I) ausgewählt sind aus -SiH₃, -SiH₂X, -SiHX₂ und -SiX₃, -SiH₂OH, -SiH(OH)₂, -Si(OH)₃, wobei X ein Halogen ist, bevorzugt Cl.

8. Verfahren nach Anspruch 4, wobei in Formel (II) n größer oder gleich 2, zum Beispiel größer oder gleich 3 oder sogar größer oder gleich vier ist.

9. Verfahren nach einem der Ansprüche 4 und 5, wobei in Formel (II) n kleiner oder gleich 500, zum Beispiel kleiner oder gleich 32, zum Beispiel kleiner oder gleich 17 ist.

10. Verfahren zur Herstellung oder Regenerierung von flüssigen Siloxan-Wasserstoffträgerverbindungen nach einem der vorhergehenden Ansprüche, wobei die Verbindungen aus einer Mischung der cyclischen Siloxan-Wasserstoffträgerverbindungen der Formel (II) und der linearen Siloxan-Wasserstoffträgerverbindungen der Formel (I) bestehen, wobei die cyclischen Siloxan-Wasserstoffträgerverbindungen der Formel (II) mehr als 50 Molprozent der Mischung darstellen.

11. Verfahren zur Herstellung oder Regenerierung von flüssigen Siloxan-Wasserstoffträgerverbindungen nach Anspruch 10, wobei die linearen Siloxan-Wasserstoffträgerverbindungen der Formel (I) mehr als 2,0 Molprozent und weniger als 20 Molprozent der Mischung darstellen.

## Revendications

1. Procédé de production d'un composé siloxane liquide porteur d'hydrogène, ledit procédé comprenant les étapes consécutives suivantes de :
- fourniture d'un composé de silice et/ou d'un composé de silicate,
o la soumission du composé de silice et/ou du composé de silicate à une étape d'hydrogénation 2(a) pour produire H₂Si(OH)₂ et la soumission de H₂Si(OH)₂ à une étape de polycondensation 4 pour produire ledit composé siloxane liquide porteur d'hydrogène, ou
o la soumission du composé de silice et/ou du composé de silicate à une étape d'hydrogénation et de déshydratation 2(b) pour produire H₂SiO, et
▪ la soumission de H₂SiO à une étape d'hydrolyse 3(a) pour produire H₂Si(OH)₂ et la soumission de H₂Si(OH)₂ à une étape de polycondensation 4 pour produire ledit composé siloxane liquide porteur d'hydrogène, ou
▪ la soumission de H₂SiO à une étape de polymérisation 3(b) pour produire ledit composé siloxane liquide porteur d'hydrogène.

2. Procédé de régénération d'un composé siloxane liquide porteur d'hydrogène dans lequel un composé siloxane liquide porteur d'hydrogène est soumis à une oxydation hydrolytique pour la production d'hydrogène et d'un composé de silice et/ou de silicate (B) suivie du procédé selon la revendication 1 pour produire un composé siloxane liquide porteur d'hydrogène.

3. Procédé de régénération d'un composé siloxane liquide porteur d'hydrogène selon la revendication 2, dans lequel le composé siloxane porteur d'hydrogène régénéré est chimiquement identique au composé siloxane porteur d'hydrogène soumis à une oxydation hydrolytique.

4. Procédé de production ou de régénération d'un composé siloxane liquide porteur d'hydrogène selon l'une quelconque des revendications précédentes, dans lequel le composé siloxane porteur d'hydrogène est choisi parmi
(I) des composés siloxanes liquides linéaires porteurs d'hydrogène de formule (I) : 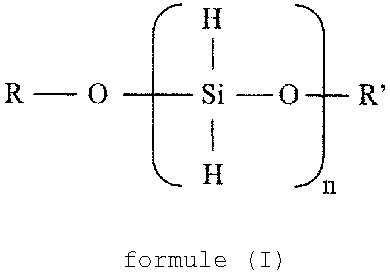 dans laquelle n est un nombre entier (représentant le nombre d'unités répétitives) supérieur ou égal à un et dans laquelle les radicaux R et R' ne contiennent pas de carbone et dans laquelle R et R' comprennent Si et un hydrogène et/ou un oxygène et/ou un halogène, et
(II) composés siloxanes cycliques ayant la formule (II) 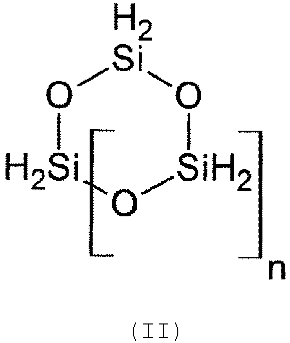 dans laquelle n est un nombre entier (représentant le nombre d'unités répétitives H₂SiO) supérieur ou égal à un.

5. Procédé selon la revendication 4 dans lequel, dans la formule (I), n est supérieur ou égal à 2, par exemple supérieur ou égal à 3, voire supérieur ou égal à quatre.

6. Procédé selon l'une quelconque des revendications 4 et 5 dans lequel, dans la formule (I), n est inférieur ou égal à 500, par exemple inférieur ou égal à 50.

7. Procédé selon l'une quelconque des revendications 4 à 6, dans lequel les radicaux R et R' dépourvus de carbone ci-dessus de formule (I) sont choisis parmi -SiH₃, -SiH₂X, -SiHX₂, et -SiX₃, -SiH₂OH, -SiH(OH)₂, -Si(OH)₃ avec X étant un halogène, de préférence Cl.

8. Procédé selon la revendication 4 dans lequel, dans la formule (II), n est supérieur ou égal à 2, par exemple supérieur ou égal à 3, voire supérieur ou égal à quatre.

9. Procédé selon l'une quelconque des revendications 4 et 5 dans lequel, dans la formule (II), n est inférieur ou égal à 500, par exemple inférieur ou égal à 32, par exemple inférieur ou égal à 17.

10. Procédé de production ou de régénération de composés siloxanes liquides porteurs d'hydrogène selon l'une quelconque des revendications précédentes, lesdits composés consistant en un mélange des composés siloxanes cycliques porteurs d'hydrogène de formule (II) et des composés siloxanes linéaires porteurs d'hydrogène de formule (I), dans lequel les composés siloxanes cycliques porteurs d'hydrogène de formule (II) représentent plus de 50 pourcent en moles du mélange.

11. Procédé de production ou de régénération de composés siloxanes liquides porteurs d'hydrogène selon la revendication 10, dans lequel les composés siloxanes linéaires porteurs d'hydrogène de formule (I) représentent plus de 2,0 pourcent en moles et moins de 20 pourcent en moles du mélange.
